# FASCICULE DE BREVET EUROPEEN

(11) **EP 2 250 216 B1**
(45) Date de publication et mention de la délivrance du brevet: **25.02.2015**
(21) Numéro de dépôt: 09706785.4
(22) Date de dépôt: 30.01.2009
(51) Int. Cl.: E01C 7/18, E01C 19/10, C08L 95/00, C08K 5/098

(54) **UTILISATION D'UN MÉLANGE EXOTHERMIQUE POUR LA FABRICATION D'UN ENROBE BITUMINEUX**
VERWENDUNG EINER EXOTHERMEN MISCHUNG ZUR HERSTELLUNG EINES BITUMINÖSEN GEMISCHES
USE OF AN EXOTHERMIC MIXTURE FOR MANUFACTURING A BITUMINOUS MIX

(30) Priorité: 01.02.2008 FR 0850644
(43) Date de publication de la demande: 17.11.2010
(73) Titulaire: Innophos, Inc., Cranbury, NJ 08512 (US)
(72) Inventeur: LESUEUR, Didier, B-1640 Rhode-Saint-Genèse (BE); DELFOSSE, Frédéric, F-33600 Pessac (FR); MARTIN, Jean-Valéry, Princeton 08540 (US)
(74) Mandataire: Regimbeau
(86) Numéro de dépôt international: PCT/EP2009/051076
(87) Numéro de publication internationale: WO 2009/095476

(56) Documents cités:
- WO-A-2005/028756
- FR-A- 2 658 524
- FR-A- 2 901 279
- US-A1- 2006 081 374
- US-B1- 6 248 257

## Description

La présente invention concerne l'utilisation d'un mélange d'additifs rentrant dans la composition de matériaux routiers, en particulier des enrobés bitumineux, ainsi qu'un procédé d'utilisation de ce mélange. L'utilisation de ce mélange dans de telles formulations permet une élévation de la température de l'enrobé au contact de l'eau. Cette élévation de température améliore considérablement les conditions de mise en oeuvre et d'application des matériaux routiers mais également leurs propriétés mécaniques.

Un enrobé bitumineux est un mélange d'au moins des granulats et un liant bitumineux. Typiquement et de manière non restrictive, la quantité suffisante de liant, pour obtenir 1 à 15 parties massiques de bitume résiduel, est malaxée avec 85 à 99 parties massiques de granulat (considérant leur poids sec). Il existe, en fonction de la composition et notamment celle du squelette granulaire, des enrobés continus ou discontinus, épais, minces, très minces voire ultra-minces, ouverts (ou encore drainant ou poreux), grenus, semi-grenus, denses ou semi-denses, stockables ou non, etc. bien connus de l'homme du métier, généralement normalisés et décrit par exemple dans l'ouvrage en 2 tomes « Les enrobés bitumineux », édité conjointement par l'union des syndicats des industries routières de France (USIRF) et la Revue Générale des Routes et Aérodrômes (Paris, 2001). Des additifs peuvent être ajoutés soit au liant, soit au granulat, soit à l'enrobé. La fabrication de l'enrobé, c'est-à-dire la manière de mélanger les constituants, peut être obtenue de diverses façons. On distingue généralement deux familles de procédés : les procédés dits "à chaud" et les procédés dits "à froid". De manière plus récentes, sont apparus des procédés dits "tièdes" (warm) ou "semi-tièdes" (half-warm), intermédiaires entre les deux. La distinction entre les procédés tient essentiellement à la température des granulats.

Dans le cas du procédé dit "à chaud", les granulats sont chauffés dans des dispositifs appelés "sécheurs" afin de les sécher, permettant ainsi une bonne adhésion du bitume au granulat. Le bitume est également chauffé, à des températures de l'ordre de 160°C afin d'en abaisser la viscosité et de permettre un bon enrobage des granulats. L'enrobé ainsi formé est ensuite appliqué chaud (typiquement à plus de 150°C) sur la chaussée puis compacté chaud également, la température initialement élevée garantissant sa maniabilité. Le matériau se rigidifie ensuite au fur et à mesure qu'il se refroidit.

Dans les procédés dits "à froid", les granulats ne sont pas séchés, et sont mélangés tels quels, c'est-à-dire avec leur humidité naturelle et à température ambiante. Le bitume arrive alors sous diverses formes, la plus courante étant celle d'une émulsion de bitume qui permet ainsi d'avoir un produit peu visqueux et donc maniable à température ambiante. L'émulsion est parfois légèrement réchauffée à des températures de l'ordre de 50°C. Un autre moyen, d'usage encore peu développé mais en croissance, consiste à faire mousser le bitume chaud (typiquement 160°C) au contact d'un peu d'eau injectée directement dans le bitume selon des procédés adaptés, pour ensuite mélanger cette mousse au granulat dans son humidité naturelle. Des additifs peuvent être ajoutés au bitume et/ou à l'eau injectée pour modifier les propriétés de la mousse, notamment sa stabilité et son volume.

Les procédés dits "tièdes" ou "semi-tièdes", d'usage encore marginal, et dont le nom est parfois différent de celui proposé ici (semi-chaud,...) mais que l'homme de l'art saura reconnaître de manière non équivoque, consistent soit à légèrement réchauffer le granulat, mais pas assez pour le sécher complètement, soit à le sécher à des températures justes supérieures à 100°C. Plusieurs procédés existent, le liant pouvant par exemple être apporté sous les mêmes formes que pour les enrobés à froid (émulsion ou mousse de bitume). Également, et en particulier lorsque l'objectif est de diminuer la température de fabrication et de mise en oeuvre des enrobés à chaud, afin de limiter les émissions de fumées, cela peut nécessiter l'emploi d'additifs ou de procédés originaux afin d'obtenir que l'enrobé maintienne un niveau de maniabilité compatible avec sa mise en oeuvre à des températures inférieures à celles habituellement utilisées. L'enrobage à chaud est nettement majoritaire car il présente l'avantage d'assurer une cohésion importante et quasi-immédiate de l'enrobé final dû à un enrobage uniforme des granulats et un refroidissement rapide, mais présente cependant un certain nombre de problèmes. En effet, les températures nécessaires à son utilisation induisent une forte consommation d'énergie qui a un impact économique important sur le coût final de l'enrobé bitumineux. D'autre part, ces températures élevées provoquent des émissions accrues de Composés Organiques Volatiles (COV), de poussières et de fumées, créant une gêne pour l'environnement mais aussi pour les travailleurs au voisinage de ces matériaux. Une autre limitation provient de la nécessité de stocker et transporter chaud le bitume avant son utilisation finale. Pour finir, la température élevée lors du malaxage engendre également un vieillissement accéléré du bitume, ce qui en limite la durabilité, rendant la chaussée plus sensible aux phénomènes de fissurations.

Les autres procédés, tièdes et semi-tièdes, permettent de diminuer ces nuisances, et les plus efficaces en ce sens sont logiquement les procédés à froid. Ils présentent toutefois des limitations, en particulier des propriétés mécaniques évolutives dans le temps, qui sont généralement libellées sous le terme générique de mûrissement.

Ainsi, dans le cas des enrobés à froid à l'émulsion de bitume, ces évolutions proviennent de la rupture de l'émulsion, c'est-à-dire le passage d'un état initial où le bitume est dispersé sous forme de fines gouttelettes dans une phase aqueuses (émulsion) vers un état final où le bitume constitue un film enrobant les granulats. Ceci ne provient pas seulement de la présence d'eau à évacuer, qui empêche de plus un compactage aussi efficace que pour les enrobés à chaud, mais aussi des interactions complexes entre l'émulsion et le granulat.

Dans le cas des enrobés à froid à la mousse de bitume, ces évolutions ne sont pas bien comprises et proviennent vraisemblablement en partie de la présence d'eau à évacuer, qui empêche également un compactage aussi efficace que pour les enrobés à chaud. Ces problèmes font que les enrobés à froid ont des propriétés mécaniques évolutives en fonction du temps (on parle alors de mûrissement) et en conséquence, ils peuvent nécessiter des temps de réouvertures au trafic parfois très longs pour permettre la prise du matériau, occasionnant des gênes accrues pour les usagers. Ces effets sont d'autant plus marqués que la température ambiante est basse et l'humidité élevée, rendant difficile voire technologiquement risquée la mise en oeuvre de tels matériaux par temps froid, typiquement à moins de 10°C.

Les enrobés tièdes et semi-tièdes sont autant de voie actuellement explorée pour palier à ces problèmes, mais au détriment d'une consommation énergétique qui reste nettement plus importante que pour un enrobé à froid.

Les auteurs de WO2005/028756 tentent de résoudre ces problèmes en élevant la température de l'enrobé bitumineux à froid, au moment de sa mise en oeuvre, jusqu'à 30 à 65°C à l'aide de moyens mécaniques (chauffage par rayonnement infrarouge ou ultraviolet ou ondes hautes fréquences ou micro-onde ou contact avec de l'air chaud). Toutefois, cette étape supplémentaire nécessite l'utilisation d'un dispositif de chauffage particulier, et donc une modification des dispositifs de mise en oeuvre ou de fabrication des enrobés bitumineux à froid actuels. Par ailleurs cette étape nécessite l'utilisation d'énergie pour réaliser le chauffage. Il serait donc intéressant de trouver une solution moins compliquée et plus économique en énergie aux problèmes de l'art antérieur.

En outre, la demande française FR 2 901 279 concerne un liant thermofusible à base d'asphalte ou de bitume comprenant au moins deux additifs pour abaisser la température de fabrication du produit asphaltique par rapport à celle du produit de base, le premier additif étant un composé macromoléculaire, qui est à l'état liquide aux températures usuelles d'utilisation du produit asphaltique, et le second additif étant un dérivé d'acide gras choisi dans le groupe constitué par les diesters d'acide gras et les éthers d'acide gras.

Le brevet US 6,248,257 décrit par ailleurs une source de chaleur portable qui peut être utilisée pour réchauffer de la nourriture, des boissons ou autres. L'appareil de chauffage contient une composition solide produisant de la chaleur, qui peut être stockée pendant de longues périodes de temps, et activée par l'addition d'eau ou d'une solution aqueuse. Les compositions de production de chaleur selon US 6,248,257 contiennent un anhydride d'acide, un sel acide, un anhydride basique ou un sel basique, mais ne contiennent pas de liant bitumineux.

La demande française FR 2 658 524 a trait à des compositions bitumineuses obtenues par l'incorporation de résidus de polymères thermoplastiques, notamment, des stériles d'automobiles contenant des mousses polyuréthanes et des résines thermodurcies, ainsi que leur procédé de préparation.

Par ailleurs, la demande américaine US 2006/0081374 concerne un Procédé pour fournir un chauffage localisé dans une formation souterraine, comprenant l'étape de placer à un emplacement dans la formation souterraine dans un ordre quelconque:
- un produit chimique exothermique d'hydratation, et
- une quantité efficace d'eau en contact avec le produit chimique d'hydratation exothermique pour provoquer une réaction exothermique, et
le chauffage de l'emplacement. Le produit chimique exothermique d'hydratation est choisi dans le groupe constitué d'un électrolyte relativement neutre, un oxyde métallique, un hydroxyde métallique, et un composé organique, tous capables de réaction exothermique sans générer une quantité appréciable de gaz, et de préférence dans le groupe constitué par le chlorure d'aluminium, NaOH, KOH, des sels d'halogène, les sels de sulfate, de l'oxyde de calcium, l'oxyde de baryum, et leurs mélanges.

Toutefois, aucun de ces documents ne divulgue ni ne suggère l'utilisation d'un mélange exothermique contenant au moins i) un anhydride d'acide ou un sel d'acide et ii) un anhydride basique ou un sel basique en tant qu'additif dans un enrobé bitumineux pour augmenter la température.

Les inventeurs ont ainsi découvert de façon surprenante qu'un mélange d'additifs particuliers, une fois mélangé à l'enrobé à froid, permet d'en élever la température grâce à une réaction exothermique avec l'eau. L'élévation de la température peut ainsi être obtenue sans avoir à chauffer préalablement ni le granulat, ni le liant, et sans utilisation d'un dispositif de chauffage particulier de l'enrobé, permettant ainsi des économies d'énergies substantielles. Cette élévation de température a comme avantage :
- d'améliorer la maniabilité de l'enrobé par diminution de la viscosité du liant bitumineux et donc d'augmenter la compacité en place, après mise en oeuvre et compactage ;
- d'améliorer la cohésion et la rapidité de prise de cohésion de l'enrobé afin d'obtenir un durcissement accéléré de la surface, limitant ainsi les problèmes de sensibilité de tenue de surfaces des enrobés bitumineux à froids habituels ;
- de diminuer la teneur en eau résiduelle de l'enrobé pour augmenter la vitesse de mûrissement des enrobés et donc de réduire le délai de mise en circulation de la surface ;
- d'augmenter les résistances mécaniques à terme de l'enrobé ;
- d'améliorer la qualité de l'enrobage des granulats, ce qui est déterminant pour la bonne tenue de l'enrobé à l'action de l'eau, ainsi qu'aux agressions de surface ;

La présente invention concerne donc l'utilisation d'un mélange exothermique d'au moins i) un anhydride d'acide ou un sel d'acide et d'au moins ii) un anhydride basique ou un sel basique, dans un enrobé bitumineux contenant de l'eau, qui peut être un enrobé bitumineux à froid, tiède ou semi-tiède, et en particulier un enrobé à l'émulsion ou à la mousse de bitume, pour augmenter la température de l'enrobé bitumineux.

Pour une meilleure compréhension de l'invention, il apparaît utile de donner les définitions suivantes :
□ par bitume on entend un bitume routier ou toute composition comprenant essentiellement du bitume à typiquement plus de 95 % en masse et éventuellement un ou plusieurs polymère et/ou un ou plusieurs acide ou base et/ou un ou plusieurs émulsifiants et/ou un ou plusieurs viscosifiants et/ou un ou plusieurs fluxants et/ou un ou plusieurs plastifiants et/ou tout autre additif permettant d'ajuster les propriétés de la composition. À titre d'exemple, on citera les bitumes routiers, les bitumes purs, les bitumes fluxés ou fluidifiés, les bitumes modifiés par des polymères, les bitumes semi-soufflés, les bitumes partiellement modifiés par du bitume soufflé, et toutes les combinaisons de ces bitumes. Les bitumes modifiés par des polymères sont définis par la norme NF EN 125291 et le document «Guide Technique: emploi des liants modifiés, des bitumes spéciaux et des bitumes avec additifs en techniques routières » publié par le Laboratoire Central des Ponts et Chaussées LCPC (ISSN 1151-1516 ISBN 2-7208-7140-4). Parmi les polymères utilisables pour modifier les bitumes, on peut citer les copolymères styrène-butadiène, les copolymères styrène-isoprène, les copolymères éthylène-acétate de vinyle (EVA), les terpolymères, tel que par exemple le composé d'une chaîne éthylénique avec des groupements fonctionnels d'acrylate de butyle et de glycidyl acrylate de méthyle qui assurent une bonne stabilité au mélange bitume/polymère, les élastomères et les plastomères permettant une amélioration importante des résistances à la fissuration et à l'orniérage. Par extension, on entend également un liant synthétique non bitumineux visant à reproduire les propriétés du bitume sauf sa couleur noire, permettant ainsi d'obtenir des enrobés bitumineux non noirs ;
□ par liant bitumineux, on entend toute composition contenant du bitume et éventuellement un ou plusieurs additifs et/ou un ou plusieurs émulsifiants et/ou un ou plusieurs viscosifiants et/ou un ou plusieurs fluxants et/ou un ou plusieurs plastifiants et/ou tout autre additif permettant d'en ajuster les propriétés. À titre d'exemple, on citera les bitumes, les bitumes modifiés par des polymères, les émulsions de bitume et la mousse de bitume.
□ par enrobé bitumineux, on entend un mélange de granulats calibrés et d'un liant bitumineux comprenant éventuellement un ou plusieurs additif(s), par exemple des fibres organiques ou minérales, des poudrettes de caoutchouc, éventuellement issues du recyclage de pneumatiques usagés, des déchets divers (câbles, polyoléfines, ...) ainsi que leurs mélanges en toutes proportions. Son domaine d'emploi préférentiel est la construction routière, mais il peut également être employé pour assurer l'étanchéité d'un ouvrage ou d'un barrage ;
□ par granulats, on entend des granulats routiers d'origine diverses, parmi lesquels les granulats issus de carrières ou de gravières, les produits de recyclage tels que les agrégats provenant du fraisage d'enrobés anciens, les rebuts de fabrication, les matériaux provenant du recyclage de matériaux de construction (bétons de démolition, ...), les laitiers, les schistes, les granulats artificiels de toute origine et provenant par exemple de mâchefers d'incinération des ordures ménagères (MIOM), ainsi que leurs mélanges en toutes proportions Les granulats ont généralement une granulométrie choisie dans la gamme 0/Dₘₐₓ, Dₘₐₓ étant le diamètre maximal du granulat tel que défini selon la norme XP P 18-540 et allant en général de 4 à 31,5 mm. Les granulats contiennent généralement des fines minérales, définies comme les granulats passant par un tamis de 0,063 mm, naturelles ou d'apport, par exemple des fines calcaires (carbonate de calcium), du ciment ou de la chaux hydratée.

Le mélange exothermique des composés i) et ii), qui sert d'additif selon la présente invention, est en particulier décrit dans le brevet US6248257.

Les exemples d'anhydride d'acide (composé i)) utilisables dans le mélange exothermique selon la présente invention incluent le pentoxyde de phosphore (P₂O₅) ; le monophosphate de sodium ; les anhydrides d'acide partiellement hydratés tels que l'acide polyphosphorique ; les autres oxydes non métalliques comme par exemple B₂O₃ et BO ; les anhydrides d'acides carboxyliques tels que l'anhydride acétique, l'anhydride formique, l'anhydride propionique, l'anhydride butyrique, l'anhydride isobutyrique, l'anhydride valérique, l'anhydride isovalérique, l'anhydride pivalique, l'anhydride caproïque, l'anhydride caprylique, l'anhydride caprique, l'anhydride laurique, l'anhydride malonique, l'anhydride succinique, l'anhydride gluratique, l'anhydride adipique, l'anhydride pimélique, l'anhydride phtalique et l'anhydride maléique ou un mélange de ceux-ci. Le pentoxyde de phosphore et le monophosphate de sodium ou leurs mélanges sont particulièrement avantageux dans le cadre de la présente invention. Le pentoxyde de phosphore est encore plus particulièrement avantageux.

Les exemples d'anhydrides basiques (composé ii)) utilisables dans le mélange exothermique selon la présente invention incluent les oxydes basiques, partiellement hydratés, par exemple l'oxyde de calcium ou chaux (CaO), qui est bien connu dans l'art antérieur pour contenir certains hydroxydes de calcium. D'autres exemples d'anhydrides basiques incluent les oxydes de métaux sélectionnés parmi le lithium, le sodium, le potassium, le rubénium, le césium, le magnésium, le strontium, et le baryum. Ainsi, ces oxydes incluent Li₂O, Na₂O, K₂O, Rb₂O, Cs₂O, MgO (magnésie), CaO (chaux), SrO, et BaO. La chaux CaO et la magnésie MgO ou leurs mélanges sont particulièrement avantageux dans le cadre de la présente invention. La chaux CaO est encore plus particulièrement avantageuse.

Dans le cadre de la présente invention, le terme « sel d'acide » se réfère à un sel qui, après dilution dans l'eau, diminue le pH de la solution aqueuse en dessous de 7, et le terme « sel basique » se réfère à un sel qui, après dissolution dans l'eau, augmente le pH de la solution aqueuse au dessus de 7.

Ainsi des exemples de sels acides (composé i)) utilisables dans le mélange exothermique selon la présente invention incluent le chlorure d'aluminium (AlCl₃), le chlorure de zinc (ZnCl₂), le tétrachlorure de titane (TiCl₄), le chlorure de fer (FeCl₂), le chlorure ferreux (FeCl₃) et le nitrate de fer (Fe(NO₃)₃). Le chlorure d'aluminium est le sel d'acide préféré à cause de la forte augmentation de chaleur qu'il génère.

Les sels basiques (composé ii)) qui peuvent être utilisés dans le mélange exothermique selon la présente invention sont l'acétate de sodium, le benzoate de sodium et l'ascorbate de potassium. L'acétate de sodium est le sel basique préféré.

Les mélange exothermiques avantageux dans le cadre de la présente invention, sont ceux qui ont une ou plusieurs des propriétés suivantes : 1) la production relativement importante de chaleur par poids lors de la réaction avec l'eau ; 2) la formation de produits de réaction non classifiés comme dangereux au sens de la législation en vigueur, notamment en Europe (directives 1967/548/CE et 1988/379/CE et leurs actualisations successives) et en Amérique du Nord, sur la classification des substances et préparations. Avantageusement le composé i) est un anhydride d'acide et le composé ii) est un anhydride basique. En particulier, le produit ou les produits de réaction ne doivent pas provoquer de détérioration d'une ou plusieurs des propriété(s) physicochimique(s) de l'un ou plusieurs des constituants de l'enrobé, ni présenter une classification toxique ou écotoxique selon les normes en vigueurs.

Le mélange exothermique du pentoxyde de phosphore et de la chaux ou le mélange exothermique du monophosphate de sodium et de la magnésie ou le mélange exothermique du pentoxyde de phosphore et de la magnésie sont particulièrement avantageux dans le cadre de la présente invention.

Le mélange exothermique du pentoxyde de phosphore et de la chaux est encore plus particulièrement avantageux dans le cadre de la présente invention à cause de la forte création de chaleur due aux réactions d'hydratation et de neutralisation.

En effet, dans le cadre de la présente invention, la chaleur est produite par l'hydratation d'au moins un parmi les anhydrides d'acide, sel d'acide, anhydride basique ou sel basique. De la chaleur supplémentaire est également produite par neutralisation des produits d'hydratation acides ou basiques obtenus. Avantageusement, les réactions successives ou simultanées produisant de la chaleur donnent un produit final ayant un pH compris entre 4 et 10 et de façon avantageuse entre 6 et 8.

Des exemples de composition du mélange exothermique selon la présente invention sont présentés dans le tableau 1 suivant (la quantité d'eau en poids n'est pas incluse dans le tableau) :

**Tableau 1**

| **Composé i) (acide)** | **Composé ii) (base)** | **Produit obtenu après réaction** | **Production de chaleur en kJ/kg** |
|---|---|---|---|
| AlCl₃ | MgO | Al(OH)₃ + MgCl₂ (aq) | 2349 |
| FeCl₃ | MgO | Fe(OH)₃ + MgCl₂ (aq) | 1465 |
| P₂O₅ | MgO | Mg₃(PO₄)₂ (s) | 1968 |
| AlCl₃ | Na₂O | Al(OH)₃ + NaCl (aq) | 3903 |
| AlCl₃.6H₂O | Na₂O | Al(OH)₃ + NaCl (aq) | 1435 |
| NaHCO₃ | Na₂O | Na₂CO₃ (aq) | 1251 |
| FeCO₃ | Na₂O | Na₂CO₃(aq) + FeO | 1505 |
| FeCl₃.6H₂O | Na₂O | Fe(OH)₃ + NaCl(aq) + H₂O | 2335 |
| HC₂H₃O₂ | Na₂O | NaC₂H₃O₂ (aq) + H₂O | 2617 |
| B₂O₃ | Na₂O | NaBO₂ (aq) | 2708 |
| B₂O₃ | Na₂O | Na₂B₄O₇(s) | 2038 |
| P₂O₅ | Na₂O | Na₃PO₄ (aq) | 3915 |
| P₂O₅ | Na₂O | Na₂HPO₄ (aq) | 3615 |
| (CH₃CO)₂O | Na₂O | NaC₂H₃O₂ (aq) | 2512 |
| P₂O₅ | CaO | Ca₃(PO₄)₂(s) | 2407 |
| FeCl₃ | CaO | Fe(OH)₃ + CaCl₂ (aq) | 1454 |
| AlCl₃ | CaO | Al(OH)₃ + CaCl₂ (aq) | 2363 |
| C₄H₄O₃ | CaO | CaC₄H₂O₃ | 1765 |
| H₂C₂O₄ | CaO | CaC₂H₂O₄ (aq) + H₂O | 1463 |
| (CH₃CO)₂O | CaO | Ca(C₂H₃O₂)₂ (aq) | 1619 |

Avantageusement le mélange exothermique selon l'invention, c'est-à-dire les composés i) et ii) du mélange exothermique et donc les anhydrides et les sels, se trouve sous forme solide ou liquide à température ambiante et de façon avantageuse sous forme solide. En effet cette caractéristique permet une manipulation aisée du mélange exothermique.

Le rapport massique entre (l'anhydride d'acide ou le sel d'acide) et (l'anhydride basique ou le sel basique) dans les mélanges exothermiques selon la présente invention peut varier grandement. Ce rapport massique des composés est généralement sélectionné pour augmenter la production de chaleur et donner un produit de réaction neutre. Ainsi, un excès en poids de l'un ou l'autre des composés i) ou ii) du mélange exothermique peut être requis afin d'obtenir la réaction.

Avantageusement, un rapport massique des composés acides et basiques compris respectivement entre 1/99 et 99/1 est utilisé. De manière avantageuse, ce rapport est compris entre 70/30 et 30/70 et de manière encore plus avantageuse entre 55/45 et 45/55.

La sélection des composés particuliers du mélange exothermique produisant de la chaleur selon la présente invention dépend de plus de la quantité de chaleur désirée pour une application particulière. Avantageusement, dans le cadre de la présente invention, il est intéressant d'obtenir une augmentation de la température de l'enrobé de 1 à 100°C, et avantageusement de 5 à 20°C, quelle que soit la température initiale de l'enrobé. Généralement, la température est élevée de manière à contrôler la température au moment de la mise en oeuvre de l'enrobé.

Par température de mise en oeuvre de l'enrobé, on entend la température de l'enrobé lors de l'épandage ou du compactage.

Le choix de l'élévation de température se fait également compte tenu éventuellement du transport, de telle sorte que l'enrobé ait la température requise pour sa mise en oeuvre.

Le mélange exothermique selon l'invention est activé en rentrant en contact avec l'eau contenue dans l'enrobé, qui peut provenir par exemple de l'humidité naturelle du granulat, d'eau apportée lors de la fabrication de l'enrobé ou encore de l'émulsion de bitume et/ou dans les agrégats. Un retardateur peut être inclus dans le mélange exothermique pour réguler, typiquement retarder, la production de chaleur du mélange exothermique. Un tel retardateur permet donc le contrôle de l'exothermie et en particulier de la cinétique de production de la chaleur. Le retardateur limite l'accès a l'un des constituants de la formule par les autres réactifs constitutifs de la formule considérée (limitation de la diffusion d'eau, réduction de la solubilite d'un ou plusieurs constituants...). Un tel retardateur est également avantageusement choisi parmi la liste suivante :
- borax, acide borique ou orthoborique ou plus generalement la plupart des composes a base de borate
- Le chlorure de sodium
- Acide tartrique et ses sels
- Acide adipique et ses sels
- Acid citrique et ses sels
- Acide glutairque et ses sels
- Acid stearique et ses sels
- Acide ocalique et ses sels
- Acide acetohydroxamique
- Les fluorures et silicoflurore
- Les sels alcalins ou alcalinoterreux de phosphates et polyphosphates tel que le le pyrophosphate, le tripolyphosphate, l'hexamethphopshate
- Les produits commerciaux tel que Acumer® 1000 de l'entreprise Rohm and Haas, Millsperse® 956 ou le Drewgard® 4006 de l'entreprise Ashland, etc.

La quantité de retardateur inclus dans le mélange exothermique selon la présente invention dépendra de la quantité de chaleur désirée, et en particulier des composés du mélange exothermique et de l'effet retard désiré. Avantageusement, le retardateur représente entre environ 1 et 50 % en poids du mélange exothermique selon la présente invention, de façon avantageuse entre 1 et 20 % en poids du mélange exothermique, de façon encore plus avantageuse entre 5 et 14% en poids du mélange exothermique. Avantageusement le retardateur permet de retarder la génération de chaleur de quelques minutes à plusieurs heures (2 heures par exemple).

Dans un mode de réalisation particulier de l'invention, le mélange exothermique selon l'invention est utilisé en une quantité comprise entre 0,1 et 10 % en poids par rapport au poids total des granulats secs de l'enrobé, avantageusement entre 0,5 et 6 % en poids par rapport au poids total des granulats secs de l'enrobé, de façon avantageuse entre 1 et 2% en poids par rapport au poids total des granulats secs de l'enrobé.

La présente invention concerne en outre un procédé de fabrication d'un enrobé bitumineux à froid, tiède ou semi-tiède pour revêtement routier, par enrobage de granulats avec un liant bitumineux contenant de l'eau, avantageusement en émulsion ou sous forme de mousse de bitume, caractérisé en ce qu'on ajoute un mélange exothermique selon l'invention aux granulats et/ou au mélange granulats/liant bitumineux contenant de l'eau, pour obtenir une élévation de la température de l'enrobé, avantageusement comprise entre 5 et 20°C. Ainsi, le mélange exothermique selon l'invention permet par exemple d'étendre la période de mise en oeuvre des enrobés à froid en particulier pour des températures externes inférieures à 10°C, et plus spécifiquement entre -10°C et 10°C. D'une manière proche, il peut s'utiliser également pour ajuster les propriétés mécaniques initiales, c'est-à-dire lors de la mise en oeuvre, ou finales, c'est-à-dire une fois en place, des enrobés tièdes ou semi-tièdes.

Le procédé selon l'invention peut donc être utilisé pour fabriquer tous types d'enrobés bitumineux à froid, tièdes ou semi-tièdes, et avantageusement pour un enrobé contenant un liant bitumineux sous forme d'émulsion ou de mousse de bitume.

Les granulats utilisés dans le procédé selon l'invention peuvent être tous types de granulats tels que définis précédemment.

Dans un mode de réalisation avantageux, le mélange exothermique selon l'invention est ajouté dans les granulats et/ou fines avant l'enrobage avec le liant bitumineux contenant de l'eau.

Dans un autre mode de réalisation avantageux, le mélange exothermique selon l'invention est ajouté lors de l'enrobage des granulats avec le liant bitumineux contenant de l'eau, c'est à dire lors du malaxage des granulats et du liant bitumineux contenant de l'eau.

Dans un troisième mode de réalisation avantageux, le mélange exothermique selon l'invention est ajouté sur l'enrobé bitumineux après sa mise en oeuvre, avantageusement après son épandage et avant son compactage ou après son compactage.

Dans chacun de ces trois modes de réalisation, si un retardateur est nécessaire, il est ajouté en même temps que le mélange exothermique.

Selon un autre mode de réalisation avantageux, les composés (i) et (ii) du mélange exothermique selon l'invention sont incorporés de manière séparée avec l'un des autres composants de l'enrobé (granulats et liant bitumineux contenant de l'eau) de manière à provoquer l'exothermie lors de leur rencontre. Par exemple, le composé (i) peut être mélangé au granulat et le composé (ii) au liant bitumineux contenant de l'eau pour que l'exothermie se produise lors du malaxage des granulats avec le liant. L'éventuel retardateur pourra alors être apporté avec l'un et/ou l'autre des réactifs.

Ainsi, le mélange exothermique selon l'invention peut être soit ajouté au granulat, soit encore à une fraction donnée des granulats (fines minérales, sable, gravillon,...), soit directement dans l'enrobé lors de sa fabrication, pendant sa mise en oeuvre (au répandage, au compactage ou encore juste avant ou juste après l'une de ces étapes) ou encore après sa mise en oeuvre. L'enrobé est généralement mis en oeuvre par une étape d'épandage sur la chaussée et une étape de compactage. Généralement, après l'enrobage, l'enrobé obtenu est éventuellement stocké, puis transporté sur le lieu du chantier, si l'enrobage n'a pas été effectué sur le chantier, pour être mis en oeuvre. Ainsi, l'enrobé à froid peut être chauffé par ajout du mélange exothermique selon l'invention et éventuellement d'un retardateur, avant l'épandage, c'est-à-dire après l'enrobage et avant ou après le transport sur le lieu d'application, s'il y a lieu, qu'il y ait ou non une phase de stockage, et/ou pendant l'épandage et/ou après l'épandage au cours du compactage.

L'augmentation de température grâce au mélange exothermique selon l'invention entraîne notamment l'augmentation de la température du liant et de l'eau présents dans l'enrobé. L'augmentation de la température du liant va considérablement modifier sa viscosité et donc améliorer la qualité de l'enrobage et la maniabilité de l'enrobé, par exemple son aptitude au compactage.

La présente invention concerne également un enrobé bitumineux susceptible d'être obtenu par le procédé selon la présente invention. Avantageusement cet enrobé comprend le produit de la réaction entre les composés i) et ii) du mélange exothermique selon l'invention. Ce produit de réaction peut apporter en outre des propriétés avantageuse à l'enrobé selon l'invention. En effet il rigidifie le bitume plus que les fines classiques habituellement utilisées et améliore la tenue à l'eau de l'enrobé. C'est en particulier le cas lorsque le produit de réaction est de l'hydroxyapatite (phosphate tricalcique obtenu par réaction du mélange exothermique chaux + anhydride phosphorique avec l'eau).

Ainsi le mélange exothermique selon l'invention permet non seulement d'améliorer la mise en oeuvre et le mûrissement des enrobés selon l'invention tout en évitant un surcoût en énergie, mais également d'obtenir un enrobé ayant des propriétés mécaniques améliorées et une meilleure tenue à l'eau et, grâce au produit de réaction, un bitume ayant une meilleure rigidité.

De façon avantageuse, l'enrobé selon l'invention comprend de 5 à 12 %, de préférence de 7 à 10 % en poids de liant par rapport au poids des granulats.

L'enrobé selon l'invention peut être par exemple une grave-émulsion ou une grave-mousse, un béton bitumineux à froid, un enrobé dense ou ouvert à froid, un enrobé coulé à froid, un enrobé provenant du recyclage en place ou en centrale d'une chaussée ancienne.

Avantageusement le liant bitumineux de l'enrobé selon l'invention est choisi parmi les bitumes routiers, les bitumes purs, les bitumes fluxés ou fluidifiés, les bitumes modifiés par des polymères, les bitumes semi-soufflés, les bitumes partiellement modifiés par du bitume soufflé et/ou leurs mélanges, utilisés tels quels ou en émulsion ou encore sous forme de mousse.

Les enrobés selon l'invention (à froid ou obtenus par des procédés tièdes ou semi-tièdes) ont des propriétés mécaniques améliorées, en particulier concernant la période de mise en oeuvre et de mûrissement.

La présente invention concerne de plus l'utilisation de l'enrobé selon l'invention pour la fabrication d'un revêtement routier.

La présente invention concerne également l'utilisation du mélange exothermique selon l'invention directement dans une émulsion de bitume. Cette émulsion peut par exemple être utilisée seule dans toutes les applications de l'émulsion, par exemple les couches d'accrochage, les enduits superficiels, les enduits de scellement ou de cure, ou encore être utilisée en présence de granulats dans un enrobé. L'introduction du mélange exothermique selon l'invention est alors réalisé par exemple au moment de l'application de l'émulsion à l'aide d'une répandeuse, d'une rampe, d'une buse etc. ou tout moyen utilisé.

La présente invention concerne en outre un granulat destiné à un enrobé bitumineux à froid, tiède ou semi-tiède à base de liant bitumineux contenant de l'eau, caractérisé en ce qu'il contient un mélange exothermique selon l'invention.

Avantageusement, le granulat comprend en outre un retardateur, avantageusement choisi parmi l'acide borique ou le tripolyphosphate.

La présente invention concerne enfin l'utilisation d'un mélange exothermique selon l'invention pour assécher les granulats et/ou fines destinés à un revêtement routier. Avantageusement ces granulats et/ou fines sont destinés à être utilisés dans un enrobé bitumineux à froid, tiède ou semi-tiède à base de liant bitumineux en émulsion.

En effet, le mélange exothermique selon l'invention peut être utilisé avec un mélange granulaire seul, naturel (sol, grave,...) ou recomposé, c'est-à-dire en l'absence de liant bitumineux, afin d'en modifier la teneur en eau.

L'invention sera mieux comprise en référence aux figures et aux exemples qui suivent.

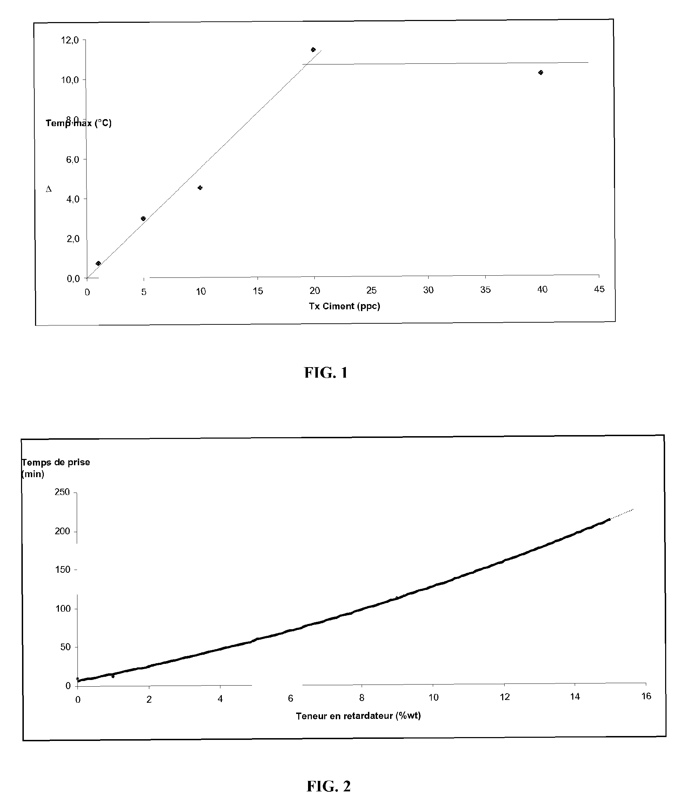

La figure 1 représente l'élévation de température maximale (en °C) obtenue en fonction de la quantité (en % en poids par rapport au poids total des granulats secs) de mélange exothermique selon l'invention (monophosphate de sodium /magnésie : 60/40) présent dans une composition de granulats (200g) et d'eau (20g).
La figure 2 représente le temps de prise du ciment (en minutes), c'est à dire le temps nécessaire à 100g de mélange exothermique selon l'invention (monophosphate de sodium/magnésie : 60/40) pour réagir avec 80g d'eau, en fonction de la quantité de retardateur (acide borique) présente dans la composition en pourcentage en poids par rapport au poids total de la magnésie présente dans la composition.

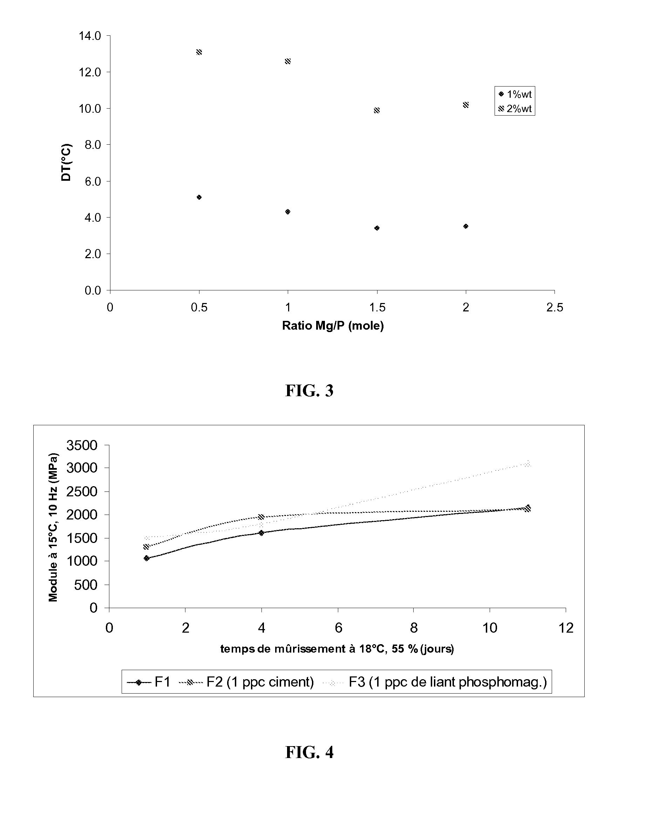

La figure 3 représente l'élévation de température maximale (DT) en °C en fonction du ratio molaire magnésie/pentoxyde de phosphore (Mg/P) pour une composition contenant 200 g de granulats routiers, 20 g d'eau et 1 ou 2% en poids par rapport au poids total de granulats secs du mélange exothermique selon l'invention (MgO/P₂O₅).
La figure 4 représente la norme du module complexe (en MPa à 15°C et 10Hz) de 3 formules de béton bitumineux à froid testées en fonction du temps de mûrissement (en jours) à 18°C et 55% d'humidité relative, la formule 1 (F1) ne contenant pas de mélange exothermique selon l'invention, la formule 2 (F2) contenant 1% en poids par rapport au poids total des granulats secs d'un ciment portland et la formule 3 (F3) comprenant 1% en poids par rapport au poids total des granulats secs d'une composition exothermique selon l'invention (ou ciment phosphomagnésien = mélange de magnésie et de monophosphate de sodium).

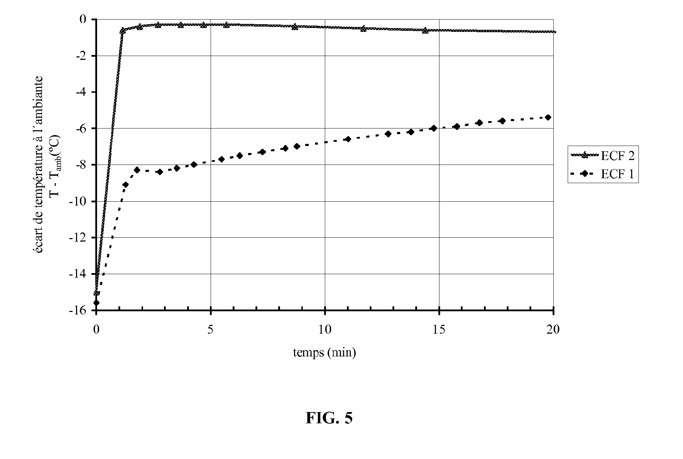

La figure 5 représente l'écart de température entre l'échantillon d'un enrobé coulé à froid (ECF) et la température ambiante (T-Tamb) en °C pour une formule ECF 1 de référence ne contenant pas de mélange exothermique selon l'invention et une formule ECF 2 contenant 2% en poids par rapport au poids total des granulats secs d'un mélange exothermique selon l'invention (chaux vive/pentoxyde de phosphore : 77/23).

### L'invention est illustrée par les exemples suivants

### Exemple 1 : Démonstration de l'exothermie

On ajoute diverses teneurs d'un mélange exothermique selon l'invention à une composition contenant des granulats routiers de la carrière de Pt Pierre et de l'eau, de manière à démontrer le potentiel du mélange exothermique selon l'invention dans des proportions proches de celles envisagées en technique routière. Le mélange exothermique selon l'invention utilisé dans cet exemple est un mélange de monophosphate de sodium et de magnésie en proportions massiques de 60 et 40 % respectivement. Les constituants sont initialement placés au moins une nuit à 20°C.

L'exothermie est quantifiée par l'élévation de température mesurée entre la référence, sans mélange exothermique, et la composition contant les granulats, l'eau et une quantité croissante du mélange exothermique selon l'invention. La mesure est réalisée dans un vase Dewar, à l'aide d'un thermocouple plongé au coeur de la composition. L'écart de température ainsi observé est illustrée dans la Figure 1.

### Compostions massique des composition :

Granulats : 200 g dont:
   - 40 % de 0/4,
   - 18 % 4/6,
   - 42 % 6/10.
Eau: 20 g
Mélange exothermique selon l'invention (monophosphate de sodium/magnésie (60/40)) : de 0 à 90 g

Il apparaît qu'un mélange exothermique selon l'invention, lorsqu'il est introduit en quantité suffisante, permet de générer une exothermie qui augmente de plus de 10°C la température de la composition granulats/eau dans des proportions proches de celles envisagées dans les compositions bitumineuses.

### Exemple 2 : Influence de l'ajout d'un retardateur sur la réaction entre le mélange exothermique selon l'invention et l'eau (appelée prise du ciment)

Dans cet exemple, le mélange exothermique selon l'invention est un mélange de monophosphate de sodium et de magnésie. Le retardateur utilisé est de l'acide borique. La prise du ciment phosphomagnésien formé par réaction du mélange exothermique avec de l'eau dépend de l'intensité de l'exothermie. Des mesures de temps de prise à l'aide de l'essai au pénétromètre Vicat selon la norme NF P15-431 en usage chez les cimentiers permet de la quantifier. Le temps de prise ainsi observé est présenté dans la Figure 2.

### Compostions massique des composition :

Eau : 80g
Mélange exothermique monophosphate de sodium/magnésie (60/40) : 100g
Retardateur H₃BO₃ : 0 à 16 g

Il apparaît qu'un retardateur adapté permet de retarder le temps de réaction du mélange exothermique selon l'invention avec de l'eau, ce qui se traduit, pour cet exemple, par des temps de prises variant entre quelques minutes et plus de 2 heures.

### Exemple 3 : Autre exemple de mélange exothermique selon l'invention

Les granulats routiers de la carrière de Pt Pierre de l'exemple 1 sont repris pour réaliser d'autres compositions contenant de l'eau et diverses teneurs d'un autre mélange exothermique selon l'invention, de manière à démontrer le potentiel du mélange exothermique selon l'invention dans des proportions proches de celles envisagées en technique routière.

Dans cet exemple, le mélange exothermique selon l'invention est un mélange de magnésie (MgO) et de pentoxyde de phosphore (P₂O₅) à diverses proportions molaires (entre 0,5 et 2). Les constituants sont initialement placés au moins une nuit à 20°C.

L'exothermie est quantifiée par l'élévation de température maximale mesurée entre la référence, sans mélange exothermique, et la composition contenant des proportions massiques de 1 et 2 % du mélange selon l'invention par rapport au poids total des granulats secs. La mesure est réalisée dans un vase Dewar, à l'aide d'un thermocouple plongé au coeur de la composition. L'écart de température ainsi observé est représenté dans la Figure 3.

### Compostions massique des composition :

Granulats : 200 g dont
   - 40 % de 0/4,
   - 18 % 4/6,
   - 42 % 6/10.
Eau:10g
Mélange exothermique MgO/P₂O₅ avec différents ratios molaires : 1 ou 2 % massiques par rapport au poids total des granulats secs

Au même titre que les mélanges exothermiques a base de MgO et de monophosphate de sodium, les mélanges comprenant de la magnésie et de l'anhydride phosphorique permettent de générer et ce pour de faibles teneurs, une exothermie significative.

### Exemple 4: Utilisation du mélange exothermique selon l'invention dans une formule de Béton Bitumineux à Froid

Les constituants de plusieurs formules de Béton Bitumineux à Froid (BBF), décrites ci-dessous, sont mélangés dans un malaxeur SRC 50/I de SR Consulting et l'enrobé ainsi obtenu est compacté pour obtenir des éprouvettes cylindriques de diamètre 160 mm et environ 150 mm de hauteur à une teneur en vide de 17 %. Les éprouvettes sont alors stockées à 18°C et 55 % d'humidité relative pendant plusieurs semaines et la norme de leur module complexe est mesurée à 15°C et 10 Hz sur une presse hydraulique de marque MTS en fonction du temps de stockage (Figure 4).

Le mélange exothermique selon l'invention utilisé dans cet exemple est un ciment phosphomagnésien obtenu par mélange de 60 % massiques de magnésie et de 40 % massiques de monophosphate de sodium.

L'émulsion de bitume utilisée est une émulsion cationique à rupture lente contenant 60 % de bitume de type ECL-60 (selon la norme NF T65 011), fabriquée par Eurovia.

### Compositions

### Formule F1 de référence (en parties massiques) :

| | |
|---|---|
| Émulsion de bitume ECL-60 | 9 |
| Eau totale : | 7 |
| Granulat 0/10 Pt de Pierre : | 100 |

### Formule F2 de référence (en parties massiques) :

| | |
|---|---|
| Émulsion de bitume ECL-60 | 9 |
| Eau totale : | 7 |
| Ciment Portland : | 1 |
| Granulat 0/10 Pt de Pierre : | 100 |

### Formule F3 selon l'invention (en parties massiques) :

| | |
|---|---|
| Émulsion de bitume ECL-60 : | 9 |
| Eau totale : | 7 |
| Ciment phosphomagnésien : | 1 |
| Granulat 0/10 Pt de Pierre : | 100 |

Il apparaît qu'un mélange exothermique selon l'invention ajouté à un enrobé à froid tel qu'un BBF, permet d'en améliorer les propriétés mécaniques, en particulier dans la période de mûrissement, permettant l'obtention d'un module plus élevé après au moins 6 jours de mûrissement.

### Exemple 5: Utilisation du mélange exothermique selon l'invention dans une formule d'Enrobé Coulé à Froid

Les constituants de plusieurs formules d'Enrobé Coulé à Froid (ECF), décrites ci-dessous et préalablement stockés une nuit dans une enceinte climatique à 5°C, sont mélangés à la main dans un bol émaillé et l'ECF ainsi obtenu est étalé en une galette d'environ 1 cm d'épaisseur. Un thermocouple est glissé dans la galette, qui pèse environ 1 kg, et la température est mesurée en fonction du temps (Figure 5). La température de l'ECF de référence (ECF 1), c'est à dire ne contenant pas le mélange exothermique selon l'invention, augmente en fonction du temps à cause des échanges thermiques avec l'extérieur, les galettes étant placées sur une paillasse dans le laboratoire où la température ambiante est d'environ 20°C. La différence entre la courbe de l'ECF de référence et celle de l'ECF contenant le mélange exothermique selon l'invention permet donc de quantifier l'exothermie apportée par le mélange selon l'invention à l'ECF.

Le mélange exothermique selon l'invention utilisé dans cet exemple est un mélange de chaux vive et de pentoxyde de phosphore (rapport massique 77/23), préparé en pastilles et préalablement broyé. Il est le dernier constituant introduit lors du mélange des divers composants de la formule de l'ECF, c'est-à-dire juste avant la préparation de la galette.

Il faut préciser que les formules d'ECF comportent généralement une solution aqueuse de tensioactif cationique à 10-15 % massiques, appelée ci-après "retardateur de prise de l'ECF". Cette solution ne doit pas être confondu avec un éventuel retardateur selon l'invention, tel que celui décrit dans l'exemple 2. Il s'agit dans cet exemple du mélange ADP 5 fourni par Probisa.

L'émulsion de bitume utilisée est une émulsion cationique à rupture lente contenant 60 % de bitume de type ECL-2d [selon les spécifications espagnoles décrites dans le "Pliego de Prescripciones Generales Técnicas Generales para Obras de Carreteras y Puentes (PG 3)" (2ème Ed., Madrid : Liteam, 2001], fabriquée par Probisa.

### Compositions

### Formule ECF1 de référence (en parties massiques) :

| | |
|---|---|
| Granulat Montorio 0/6 : | 100 |
| Émulsion ECL-2d : | 11,7 |
| Eau totale : | 10,8 |
| Ciment Portland : | 0,5 |
| Retardateur de prise de l'ECF : | 0,45 |

### Formule ECF2 selon l'invention (en parties massiques) :

| | |
|---|---|
| Granulat Montorio 0/6 : | 100 |
| Émulsion ECL-2d : | 11,7 |
| Eau totale : | 10,8 |
| Mélange exothermique : | 2 |
| Retardateur de prise de l'ECF : | 0,45 |

Il apparaît qu'un mélange exothermique selon l'invention, lorsqu'il est ajouté dans une formule d'enrobé à froid tels que les ECF, permet de générer une exothermie qui augmente de plus de 8°C la température de l'ECF initialement à 5°C, par rapport à un ECF ne le contenant pas.

### Exemple 6 : Effet rigidifiant du produit de réaction du mélange exothermique selon l'invention avec de l'eau

Afin de simuler le produit de réaction d'un des mélanges exothermiques selon l'invention avec l'eau, il a été ajouté à un bitume routier 70/100 Repsol, 33 % massique d'hydroxyapatite Ca₁₀(PO₄)₆(OH)₂ (phosphate tricalcique fourni par Innophos), qui serait obtenu en réagissant de la chaux et de l'anhydride phosphorique avec de l'eau selon l'exemple 5.

À titre de comparaison, les mêmes quantités de différentes fines minérales utilisées couramment dans le domaine routier ont été ajoutées: des fines naturelles obtenues d'un granulat calcaire, un ciment Portland courant et un carbonate de calcium.

Les propriétés mécaniques du bitume ainsi modifié ont été évaluées par l'augmentation de sa température de ramollissement selon la norme NF EN 1427. Les résultats obtenus sont rassemblés dans le tableau 2 suivant :

**Tableau 2**

| | **Hydroxyapatite** | **Ciment portland** | **Carbonate de calcium** | **Fines calcaires** |
|---|---|---|---|---|
| **Variation de température de ramollissement (en °C)** | 12,4 | 2,9 | 2,6 | 4,2 |

Il apparaît ainsi que le produit de réaction avec l'eau d'un mélange exothermique selon l'invention, a la capacité de rigidifier le bitume de manière beaucoup plus efficace que des fines typiquement employés dans la profession.

Exemple 7 : Amélioration de la tenue à l'eau d'un enrobé bitumineux grâce à la présence du produit de réaction d'un mélange exothermique selon l'invention avec l'eau

De même manière que dans l'exemple précédent, le produit de réaction avec l'eau d'un des mélanges exothermiques selon l'invention a été incorporé à un enrobé bitumineux.

La formule de cet enrobé correspond à un enrobé semi-dense S20 selon les spécifications espagnoles décrites dans le "Pliego de Prescripciones Generales Técnicas Generales para Obras de Carreteras y Puentes (PG 3)" (2ème Ed., Madrid : Liteam, 2001). Il comporte les ingrédients des suivantes :
Bitume 40/50 Cepsa-Proas : 4,5 parties pour 100 parties de granulat sec (4,5 %)
Sable 0/6 : 35 %
Gravillon 6/12 : 32 %
Gravier 12/20 : 33 %

À cet enrobé, ont été ajoutés 3,5 %de fines d'apport, pouvant être du carbonate de calcium ou un mélange de carbonate de calcium (1,25 %) et d'hydroxyapatite (2,25 %) identiques aux matériaux de l'exemple 6 précédent.

Les échantillons ont été évalués à l'aide de l'essai d'immersion compression selon la norme espagnole NLT-162 qui mesure la résistance à la compression simple d'une éprouvette sèche (R) et après immersion dans l'eau (r). Le rapport r/R indique la tenue à l'eau du matériau.

Les résultats obtenus sont rassemblés dans le tableau 3 suivant :

**Tableau 3**

| | **Unités** | **Enrobé 1** | **Enrobé 2** |
|---|---|---|---|
| **Fines calcaires** | % | 3,5 | 1,25 |
| **Hydroxyapatite** | % | | 2,25 |
| **Densité** | g/cm3 | 2,49 | 2,46 |
| **R** | MPa | 4,07 | 3,85 |
| **r** | MPa | 3,09 | 3,13 |
| **r/R** | % | 76,0 | 81,3 |

Il apparaît ainsi que la présence du produit de réaction avec de l'eau d'un mélange exothermique selon l'invention, a la capacité d'améliorer la tenue à l'eau d'un enrobé bitumineux.

## Revendications

1. Utilisation d'un mélange exothermique d'au moins i) un anhydride d'acide ou un sel d'acide et d'au moins ii) un anhydride basique ou un sel basique, dans un enrobé bitumineux à froid, tiède ou semi-tiède à base de liant bitumineux contenant de l'eau, avantageusement un liant bitumineux en émulsion ou une mousse de bitume, pour augmenter la température de l'enrobé bitumineux.

2. Procédé de fabrication d'un enrobé bitumineux à froid, tiède ou semi-tiède pour revêtement routier par enrobage de granulats avec un liant bitumineux contenant de l'eau, avantageusement un liant bitumineux en émulsion ou une mousse de bitume, **caractérisé en ce qu'**on ajoute un mélange exothermique d'au moins i) un anhydride d'acide ou un sel d'acide et d'au moins ii) un anhydride basique ou un sel basique aux granulats et/ou au mélange granulats/liant bitumineux contenant de l'eau, pour obtenir une élévation de la température de l'enrobé, avantageusement comprise entre 5 et 20°C.

3. Procédé selon la revendication 2, **caractérisé en ce que** le mélange exothermique :
a) est ajouté dans les granulats et/ou fines avant l'enrobage avec le liant bitumineux contenant de l'eau, ou
b) est ajouté lors de l'enrobage des granulats avec le liant bitumineux contenant de l'eau, ou
c) est ajouté sur l'enrobé bitumineux après sa mise en oeuvre, avantageusement après son épandage et avant son compactage ou après son compactage.

4. Procédé selon l'une quelconque des revendications 2 ou 3, **caractérisé en ce qu'**un retardateur, avantageusement choisi parmi l'acide borique ou le tripolyphosphate, est ajouté en même temps que le mélange exothermique.

5. Procédé selon l'une quelconque des revendications 2 à 4, **caractérisé en ce que** l'anhydride d'acide est choisi parmi le pentoxyde de phosphore, le monophosphate de sodium et leurs mélanges.

6. Procédé selon l'une quelconque des revendications 2 à 5, **caractérisé en ce que** l'anhydride basique est choisi parmi la chaux, la magnésie et leurs mélanges.

7. Procédé selon l'une quelconque des revendications 2 à 6 **caractérisé en ce que** le mélange exothermique est constitué par le pentoxyde de phosphore et la chaux.

8. Procédé selon l'une quelconque des revendications 2 à 7, **caractérisé en ce que** la quantité de mélange exothermique est comprise entre 0,1 et 10 % en poids par rapport au poids total des granulats secs de l'enrobé, avantageusement entre 0,5 et 6 % en poids par rapport au poids total des granulats secs de l'enrobé.

9. Procédé selon l'une quelconque des revendications 2 à 8, **caractérisé en ce que** le rapport massique anhydride d'acide ou sel d'acide / anhydride basique ou sel basique est compris entre 70/30 et 30/70, avantageusement entre 55/45 et 45/55.

10. Granulat destiné à un enrobé bitumineux à froid, tiède ou semi-tiède à base de liant bitumineux contenant de l'eau, **caractérisé en ce qu'**il contient un mélange exothermique d'au moins i) un anhydride d'acide ou un sel d'acide et d'au moins ii) un anhydride basique ou un sel basique.

11. Granulat selon la revendication 10, **caractérisé en ce qu'**il comprend en outre un retardateur, avantageusement choisi parmi l'acide borique ou le tripolyphosphate.

12. Utilisation d'un mélange exothermique d'au moins i) un anhydride d'acide ou un sel d'acide et d'au moins ii) un anhydride basique ou un sel basique pour assécher les granulats et/ou fines destinés à un revêtement routier, les granulats et/ou fines étant destinés à être utilisés dans un enrobé bitumineux à froid, tiède ou semi-tiède à base de liant bitumineux contenant de l'eau.

13. Enrobé bitumineux susceptible d'être obtenu par le procédé selon l'une quelconque des revendications 2 à 9, **caractérisé en ce qu'**il comprend le produit de la réaction entre i) un anhydride d'acide ou un sel d'acide et ii) un anhydride basique ou un sel basique.

14. Enrobé bitumineux selon l'une quelconque des revendications 13, **caractérisé en ce qu'**il comprend de 5 à 12 %, de préférence de 7 à 10 % en poids de liant bitumineux par rapport au poids des granulats.

15. Enrobé selon l'une quelconque des revendications 13 ou 14, **caractérisé en ce que** le liant bitumineux est choisi parmi les bitumes routiers, les bitumes purs, les bitumes fluxés ou fluidifiés, les bitumes modifiés par des polymères, les bitumes semi-soufflés, les bitumes partiellement modifiés par du bitume soufflé et/ou leurs mélanges.

16. Utilisation de l'enrobé selon l'une quelconque des revendications 13 à 15 pour la fabrication d'un revêtement routier.

17. Utilisation d'un mélange exothermique d'au moins i) un anhydride d'acide ou un sel d'acide et d'au moins ii) un anhydride basique ou un sel basique dans une émulsion de bitume.

18. Utilisation selon la revendication 17, **caractérisée en ce que** ladite émulsion de bitume est utilisée en tant que couche d'accrochage, enduit superficiel, enduit de scellement ou de cure.

## Patentansprüche

1. Verwendung eines exothermen Gemischs aus zumindest i) einem Säureanhydrid bzw. einem sauren Salz und zumindest ii) einem basischen Anhydrid bzw. einem basischen Salz in einem bituminösen Kalt-, Warm- oder Halbwarm-Mischgut auf Basis von wasserhaltigem bituminösen Bindemittel, vorteilhaft bituminösen Bindemittel in Emulsion oder Bitumenschaum, um die Temperatur des bituminösen Mischguts zu erhöhen.

2. Verfahren zum Herstellen eines bituminösen Kalt-, Warm- oder Halbwarm-Mischguts für Straßenbelag durch Umhüllen von Granulat mit einem wasserhaltigen bituminösen Bindemittel, vorteilhaft bituminöses Bindemittel in Emulsion oder Bitumenschaum, **dadurch gekennzeichnet, dass** ein exothermes Gemisch aus zumindest i) einem Säureanhydrid bzw. einem sauren Salz und zumindest ii) einem basischen Anhydrid bzw. einem basischen Salz zum Granulat und/oder zum Gemisch aus Granulat/wasserhaltigem bituminösen Bindemittel hinzugefügt wird, um eine Temperaturerhöhung des Mischguts vorzugsweise zwischen 5 und 20 °C zu erhalten.

3. Verfahren nach Anspruch 2, **dadurch gekennzeichnet, dass** das exotherme Gemisch
a) vor dem Umhüllen mit dem wasserhalteigen bituminösen Bindemittel zu dem Granulat und/oder zu den Feinpartikeln hinzugegeben wird, oder
b) beim Umhüllen des Granulats mit dem wasserhaltigen bituminösen Bindemittel hinzugegeben wird, oder
c) auf das bituminöse Gemisch nach dessen Herstellung gegeben wird, vorteilhaft nach dessen Ausbreitung und vor dessen Verdichtung oder nach dessen Verdichtung.

4. Verfahren nach einem der Ansprüche 2 oder 3, **dadurch gekennzeichnet, dass** ein Verzögerer, vorteilhaft ausgewählt aus Borsäure oder Tripolyphosphat, gleichzeitig mit dem exothermen Gemisch hinzugegeben wird.

5. Verfahren nach einem der Ansprüche 2 bis 4, **dadurch gekennzeichnet, dass** das Säureanhydrid ausgewählt ist aus Phosphorpentoxid, Natriummonophosphat und deren Gemische.

6. Verfahren nach einem der Ansprüche 2 bis 5, **dadurch gekennzeichnet, dass** das basische Anhydrid ausgewählt ist aus Kalk, Magnesia und deren Gemische.

7. Verfahren nach einem der Ansprüche 2 bis 6, **dadurch gekennzeichnet, dass** das exotherme Gemisch aus Phosphorpentoxid und Kalk besteht.

8. Verfahren nach einem der Ansprüche 2 bis 7, **dadurch gekennzeichnet, dass** die Menge an exothermem Gemisch im Verhältnis zum Gesamtgewicht an Trockengranulat des Mischguts zwischen 0,1 und 10 Gew.-%, vorteilhaft im Verhältnis zum Gesamtgewicht an Trockengranulat des Mischguts zwischen 0,5 und 6 Gew.-% beträgt.

9. Verfahren nach einem der Ansprüche 2 bis 8, **dadurch gekennzeichnet, dass** das Massenverhältnis Säureanhydrid bzw. saures Salz / basisches Anhydrid bzw. basisches Salz zwischen 70/30 und 30/70, vorteilhaft zwischen 55/45 und 45/55 liegt.

10. Granulat, das für ein bituminöses Kalt-, Warm- oder Halbwarm-Mischgut auf Basis von wasserhaltigem bituminösen Bindemittel bestimmt ist, **dadurch gekennzeichnet, dass** es ein exothermes Gemisch aus zumindest i) einem Säureanhydrid bzw. einem sauren Salz und zumindest ii) einem basischen Anhydrid bzw. einem basischen Salz enthält.

11. Granulat nach Anspruch 10, **dadurch gekennzeichnet, dass** es ferner einen Verzögerer, vorteilhaft ausgewählt aus Borsäure oder Tripolyphosphat, enthält.

12. Verwendung eines exothermen Gemischs aus zumindest i) einem Säureanhydrid bzw. einem sauren Salz und zumindest ii) einem basischen Anhydrid bzw. einem basischen Salz,
um Granulat und/oder Feinpartikel zu trocknen, die für einen Straßenbelag bestimmt sind, wobei das Granulat und/oder die Feinpartikel dazu bestimmt sind, in einem bituminösen Kalt-, Warm oder Halbwarm-Mischgut auf Basis von wasserhaltigem bituminösen Bindemittel verwendet zu werden.

13. Bituminöses Mischgut, das nach dem Verfahren nach einem der Ansprüche 2 bis 9 herstellbar ist, **dadurch gekennzeichnet, dass** es das Produkt aus der Reaktion zwischen i) einem Säureanhydrid bzw. einem sauren Salz und ii) einem basischen Anhydrid bzw. einem basischen Salz enthält.

14. Bituminöses Mischgut nach Anspruch 13, **dadurch gekennzeichnet, dass** es 5 bis 12 Gew.-%, vorzugsweise 7 bis 10 Gew.-% an bituminösem Bindemittel im Verhältnis zum Gewicht des Granulats enthält.

15. Mischgut nach einem der Ansprüche 13 oder 14, **dadurch gekennzeichnet, dass** das bituminöse Bindemittel ausgewählt ist aus Straßenbaubitumen, reinem Bitumen, gefluxtem bzw. fließfähigem Bitumen, polymermodifiziertem Bitumen, halbgeblasenem Bitumen, mit geblasenem Bitumen teilweise modifiziertem Bitumen und/oder deren Gemischen.

16. Verwendung des Mischguts nach einem der Ansprüche 13 bis 15 zum Herstellen eines Straßenbelags.

17. Verwendung eines exothermen Gemisches aus zumindest i) einem Säureanhydrid bzw. einem sauren Salz und zumindest ii) einem basischen Anhydrid bzw. einem basischen Salz in einer Bitumenemulsion.

18. Verwendung nach Anspruch 17, **dadurch gekennzeichnet, dass** die Bitumenemulsion als Bindeschicht, Oberflächenbehandlung, Versiegelung oder Nachbehandlungsschicht verwendet wird.

## Claims

1. Use of an exothermic mixture of at least i) one acid anhydride or acid salt and at least ii) one basic anhydride or basic salt, in a cold, warm or half-warm asphalt concrete based on a bituminous binder containing water, advantageously a bituminous binder in emulsion or an asphalt foam, to increase the temperature of the asphalt concrete.

2. Manufacturing process of a cold, warm, or half-warm asphalt concrete for a road surface by coating aggregates with a bituminous binder containing water, advantageously a bituminous binder in emulsion or an asphalt foam, **characterized in that** an exothermic mixture of at least i) one acid anhydride or acid salt and at least ii) one basic anhydride or basic salt is added to the aggregates and/or the mixture of aggregate/bituminous binder containing water, to obtain a temperature increase of the asphalt concrete advantageously comprised between 5 and 20°C.

3. Process according to claim 2, **characterized in that** the exothermic mixture:
a) is added into the aggregates and/or fines before coating with the bituminous binder containing water, or
b) is added during the coating of the aggregates with the bituminous binder containing water, or
c) is added into the asphalt concrete after its application, advantageously after it is spread and before or after it is compacted.

4. Process according to any one of claims 2 or 3, **characterized in that** a retarder, advantageously chosen from among boric acid or tripolyphosphate, is added at the same time as the exothermic mixture.

5. Process according to any one of claims 2 to 4, **characterized in that** the acid anhydride is chosen from among phosphorous pentoxide, sodium monophosphate and their mixtures.

6. Process according to any one of claims 2 to 5, **characterized in that** the basic anhydride is chosen from among lime, magnesia and their mixtures.

7. Process according to any one of claims 2 to 6, **characterized in that** the exothermic mixture consists of phosphorous pentoxide and lime.

8. Process according to any one of claims 2 to 7, **characterized in that** the quantity of the exothermic mixture is comprised between 0.1 and 10% by weight with regard to the total weight of the dry aggregates of the asphalt concrete, advantageously between 0.5 and 6% by weight with regard to the total weight of the dry aggregates of the asphalt concrete.

9. Process according to any one of claims 2 to 8, **characterized in that** the mass ratio of acid anhydride or acid salt/basic anhydride or basic salt is comprised between 70/30 and 30/70, advantageously between 55/45 and 45/55.

10. Aggregate intended for a cold, warm or half-warm asphalt concrete based on bituminous binder containing water, **characterized in that** it contains an exothermic mixture of at least i) one acid anhydride or acid salt and at least ii) one basic anhydride or basic salt.

11. Aggregate according to claim 10, **characterized in that** it also comprises a retarder, advantageously chosen from among boric acid or tripolyphosphate.

12. Use of an exothermic mixture of at least i) one acid anhydride or acid salt and at least ii) one basic anhydride or basic salt to dry the aggregates and/or fines intended for a road surface, wherein the aggregates and/or fines are intended to be used in a cold, warm, or half-warm asphalt concrete based on bituminous binder containing water.

13. Asphalt obtainable by the process according to any one of claims 2 to 9, **characterized in that** it contains the product of the reaction between i) one acid anhydride or acid salt and ii) one basic anhydride or a basic salt.

14. Asphalt concrete according to either one of claims 13, **characterized in that** it comprises 5 to 12%, preferably 7 to 10% by weight of bituminous binder with regard to the weight of the aggregates.

15. Asphalt concrete according to any one of claims 13 or 14, **characterized in that** the bituminous binder is chosen from among road asphalts, pure asphalts, fluxed or fluidized asphalts, asphalts modified by polymers, semi-blown asphalts, partially modified asphalts by blown asphalt and/or their mixtures.

16. Use of the asphalt concrete according to any one of claims 13 to 15 for the manufacture of a road surface.

17. Use of an exothermic mixture of at least i) one acid anhydride or acid salt and at least ii) one basic anhydride or basic salt in an asphalt emulsion.

18. Use according to claim 17, **characterized in that** said asphalt emulsion is used as a bonding layer, surface coating, or sealing or curing coating.
